# DEMANDE DE BREVET EUROPEEN

(11) **EP 4 817 887 A1**
(43) Date de publication de la demande: **07.10.2026**
(21) Numéro de dépôt: 26167464.2
(22) Date de dépôt: 25.03.2026
(51) Int. Cl.: B41J 3/407, B23K 26/08, B41J 2/44, B41J 11/00, B65G 47/244

(54) **INSTALLATION DE TRAITEMENT LASER D'UN RÉCIPIENT AGENCÉE POUR APPLIQUER UN TRAITEMENT LASER SUR UNE ZONE À TRAITER DU RÉCIPIENT**

(30) Priorité: 31.03.2025 FR 2503277
(71) Demandeur: Sidel Participations, 76930 Octeville-sur-Mer (FR)
(72) Inventeur: SAVARY, Cyrille, 76930 OCTEVILLE-SUR-MER (FR); FEUILLOLEY, Guy, 76930 OCTEVILLE-SUR-MER (FR); LECOMTE, Frédéric, 76930 OCTEVILLE-SUR-MER (FR); BERNARD, Véronique, 76930 OCTEVILLE-SUR-MER (FR); DIESNIS, Daniel, 76930 OCTEVILLE-SUR-MER (FR); CHAUVIN, Guillaume, 76930 OCTEVILLE-SUR-MER (FR)
(74) Mandataire: Sidel Group

(57) **Abrégé**

L'installation de traitement laser comprend un dispositif de traitement laser (4) agencé pour appliquer un traitement laser sur le récipient (1) dans une zone à traiter (8).

L'installation de traitement laser comprend un dispositif de détection (10) agencé pour détecter la position de la zone à traiter (8) et un dispositif d'orientation (12) du récipient (1) agencé pour faire tourner le récipient (1) selon un angle de rotation déterminé en fonction de la position détectée de la zone à traiter (8), ledit dispositif d'orientation (12) étant agencé pour placer la zone à traiter (8) en regard du dispositif de traitement laser (4).

## Description

La présente invention concerne une installation de traitement laser d'un récipient, comprenant un corps s'étendant selon un axe, ledit corps comprenant au moins une zone à traiter s'étendant sur une partie du corps du récipient, ladite installation comprenant :
- Un dispositif de transport du récipient, agencé pour transporter le récipient selon un trajet de déplacement,
- Au moins un dispositif de traitement laser du récipient, ledit dispositif de traitement laser s'étendant en regard d'une partie du trajet de déplacement et étant agencé pour appliquer un traitement laser sur le récipient dans la zone à traiter du corps dudit récipient.

Un tel traitement laser est par exemple la réalisation d'un marquage au moyen d'un faisceau laser. Il est connu d'effectuer un tel traitement laser sur une succession de récipients en introduisant cette succession dans une installation de traitement laser dans laquelle les récipients sont transportés par une roue en regard de dispositifs de traitement laser portés par la roue. Une telle installation permet d'appliquer le traitement laser sur un grand nombre de récipients à une cadence élevée.

Dans le cas de récipients présentant un profil uniforme, tels que des bouteilles cylindriques et symétriques, l'introduction des récipients sur la roue ne pose pas de problème particulier puisque le traitement laser peut-être appliqué sans se préoccuper du positionnement angulaire des récipients par rapport aux dispositifs de traitement laser.

Cependant, il est souvent prévu des récipients présentant des motifs embossés formant des reliefs et des creux sur la paroi des récipients et rendant ceux-ci non symétriques. De tels motifs sont par exemple prévus pour conférer un aspect particulier aux récipients, par exemple représentatif du contenu du récipient ou d'une identité du fabricant de ce contenu. Ainsi, le motif peut être un logo ou une forme permettant d'identifier le produit contenu dans le récipient et/ou son fabricant.

Dans le cas de tels récipients non symétriques, il est par exemple prévu de laisser une zone dépourvue de motif sur laquelle le traitement laser doit être appliqué. Cependant, l'installation de traitement laser mentionnée précédemment ne peut alors plus être utilisée de façon simple car il n'est alors pas garanti que la zone à traiter de chaque récipient se trouve en regard d'un dispositif de traitement laser lorsque ce récipient est transporté par la roue.

L'un des buts de l'invention est de pallier cet inconvénient en proposant une installation de traitement laser d'un récipient dans laquelle un traitement laser peut-être appliqué sur une zone à traiter s'étendant sur une partie seulement du corps du récipient.

A cet effet, l'invention concerne une installation de traitement laser d'un récipient du type précité, comprenant en outre en amont du dispositif de traitement laser selon le trajet de déplacement :
- Un dispositif de détection agencé pour détecter la position de la zone à traiter sur le corps du récipient,
- Un dispositif d'orientation du récipient agencé pour faire tourner le récipient autour de son axe selon un angle de rotation déterminé en fonction de la position détectée de la zone à traiter, ledit dispositif d'orientation étant agencé pour placer la zone à traiter du récipient selon une orientation dans laquelle ladite zone à traiter s'étend en regard du dispositif de traitement laser lorsque ledit récipient est transporté en regard du dispositif de traitement laser.

Le dispositif de détection et le dispositif d'orientation permettent d'orienter le récipient dans une position angulaire garantissant le placement de la zone à traiter en regard du dispositif de traitement laser alors que le récipient est transporté par le dispositif de transport. Une telle installation permet de traiter des récipients non symétriques à cadence élevée en conservant notamment l'utilisation d'une roue portant des dispositifs de traitement laser, les récipients étant introduits sur cette roue avec l'orientation appliquée par le dispositif d'orientation.

L'installation de traitement laser selon l'invention peut présenter une ou plusieurs des caractéristiques suivantes, considérées seules ou selon toute combinaison techniquement envisageable :
- le dispositif de détection comprend au moins un dispositif d'acquisition d'images et un dispositif de mise en rotation du récipient, agencé pour faire tourner le récipient autour de son axe en regard du dispositif d'acquisition d'images, le dispositif d'acquisition d'images étant agencé pour acquérir des images de différentes parties du corps de récipient, un module d'analyse étant configuré pour détecter la position de la zone à traiter à partir des images acquises par le dispositif d'acquisition d'images ;
- Le dispositif de transport comprend une roue d'orientation portant le dispositif de mise en rotation du récipient, ladite roue d'orientation étant agencée pour transporter le récipient sur une partie du trajet de déplacement, ledit récipient tournant autour de son axe lorsqu'il se déplace sur ladite partie du trajet de déplacement ;
- le dispositif de transport comprend une roue de traitement portant le dispositif de traitement laser, ladite roue de traitement étant agencée pour transporter le récipient sur une partie du trajet de déplacement, ledit récipient étant fixe par rapport au dispositif de traitement laser avec la zone à traiter en regard dudit dispositif de traitement laser lorsqu'il se déplace sur ladite partie du trajet de déplacement, le dispositif de traitement laser étant agencé pour appliquer le traitement laser à la zone à traiter pendant le déplacement sur ladite partie du trajet de déplacement ;
- la roue d'orientation est distincte de la roue de traitement, la roue de traitement s'étendant en aval de la roue d'orientation, l'installation de traitement laser comprenant une zone de transfert dans laquelle le récipient est transféré de la roue d'orientation à la roue de traitement ;
- la roue d'orientation porte le dispositif d'orientation du récipient, ledit dispositif d'orientation étant agencé pour que le récipient se trouve dans une position angulaire dans laquelle la zone à traiter se trouve dans une orientation angulaire avec laquelle ladite zone à traiter s'étend en regard du dispositif de traitement laser lorsque ledit récipient est transporté par la roue de traitement
- le dispositif de transport comprend au moins un dispositif de préhension du récipient lorsqu'il est transporté par roue d'orientation et par la roue de traitement, ledit dispositif de préhension étant agencé pour autoriser la rotation du récipient autour de son axe lorsque ledit récipient est transporté par la roue d'orientation et pour empêcher ladite rotation lorsque ledit récipient est transporté par la roue de traitement ;
- le dispositif de préhension est agencé pour maintenir l'orientation du récipient dans la zone de transfert ;
- le dispositif de traitement laser est agencé pour projeter un faisceau laser sur la zone à traiter, la projection du faisceau laser étant réalisée de manière à générer des bulles et des particules de matière dégradée dans tout ou partie de l'épaisseur d'une paroi du corps du récipient au niveau de la zone à traiter ; et
- le dispositif de transport est agencé pour transporter une succession de récipients selon le trajet de déplacement, l'installation de traitement laser comprenant une pluralité de dispositifs de traitement laser agencés pour appliquer un traitement laser sur la zone à traiter de chaque récipient de ladite succession de récipients.

D'autres aspects et avantages de l'invention apparaîtront plus clairement à la lecture de la description qui va suivre, donnée uniquement à titre d'exemple non limitatif, et faite en référence aux dessins annexés, dans lesquels :
[Fig.1] - la [Fig.1] est une représentation schématique du dessus d'une partie d'une installation de traitement laser selon l'invention,
[Fig.2] - la [Fig.2] est une représentation schématique de côté d'un dispositif de détection de l'installation de traitement laser de la [Fig.1],
[Fig.3] - la [Fig.3] est une représentation schématique de côté d'un dispositif de transfert de l'installation de traitement laser de la [Fig.1],
[Fig.4] - la [Fig.4] est une représentation schématique de côté d'une partie du dispositif de traitement laser de l'installation de traitement laser de la [Fig.1],
[Fig.5] - la [Fig.5] est une représentation schématique de côté d'une partie d'un dispositif de préhension de récipient dans l'installation de traitement laser de la [Fig.1], dans une position de transition, et
[Fig.6] - la [Fig.6] est une représentation schématique de côté de la partie du dispositif de préhension de la [Fig.5] dans une position de blocage.

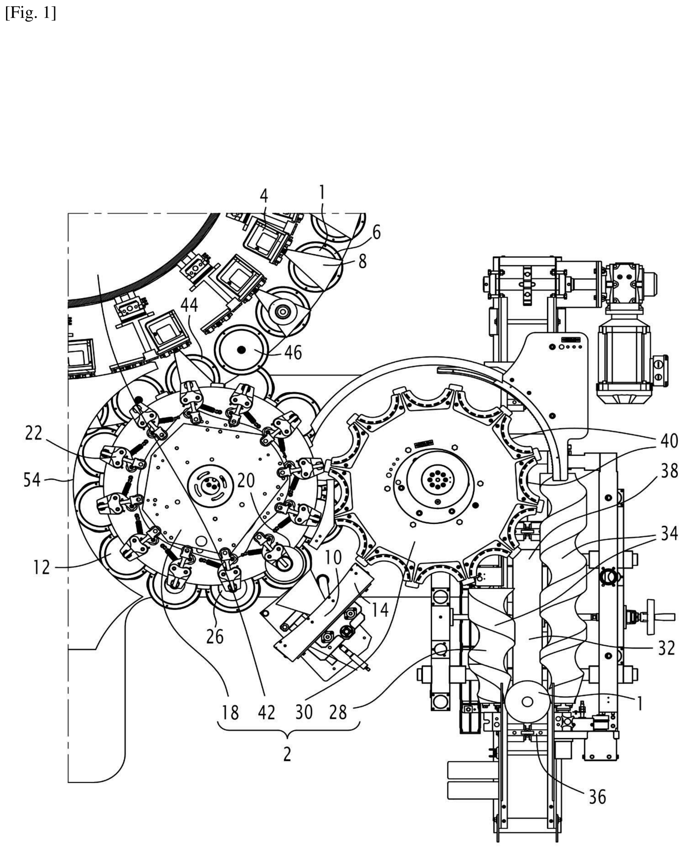

En référence à la [Fig.1], on décrit une installation de traitement laser d'au moins un récipient 1 comprenant un dispositif de transport 2 et au moins un dispositif de traitement laser 4 d'un récipient 1. Une telle installation de traitement laser est par exemple agencée pour appliquer un traitement laser sur une succession de récipients 1, plus particulièrement sur une zone à traiter circonscrite de chaque récipient 1. Un tel traitement laser est par exemple un marquage laser de la zone à traiter du ou de chaque récipient 1, comme cela sera décrit plus en détail ultérieurement.

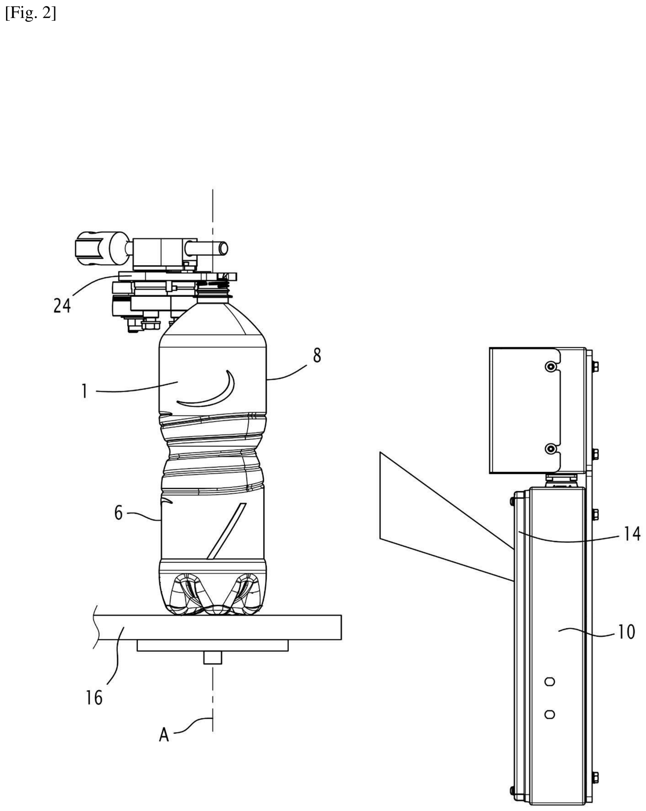

Le récipient 1 comprend un corps 6 s'étendant selon un axe A (Figs. 2 à 4) et une zone à traiter 8 s'étend sur une partie de ce corps 6. Comme indiqué précédemment, la zone à traiter 8 est circonscrite, c'est-à-dire qu'elle s'étend sur une partie limitée du corps 6, et est orientée angulairement par rapport à l'axe A. En d'autres termes, le corps 6 n'est pas symétrique autour de l'axe A et la zone à traiter 8 ne s'étend pas tout autour du corps 6 à une hauteur donnée. L'invention est ainsi particulièrement adaptée lorsque le récipient 1 présente un ou plusieurs motifs embossés formant des reliefs et des creux dans le corps 6 du récipient 1 de sorte que la section du corps 6 dans un plan perpendiculaire à l'axe A n'est pas cylindrique et symétrique sur toute la hauteur du corps 6, mesurée selon l'axe A. Dans ce cas, la zone à traiter 8 est dépourvue de motif et ne comprend donc pas de tels reliefs et de tels creux de sorte que la paroi du corps 6 est sensiblement lisse dans la zone à traiter 8.

Le dispositif de transport 2 est agencé pour transporter un ou plusieurs récipients 1 selon un trajet de déplacement de sorte que le récipient 1 passe au cours de ce trajet de déplacement en regard du dispositif de traitement laser 4 afin que ce dispositif de traitement laser 4 applique le traitement laser à la zone à traiter 8 du corps 6 du récipient 1. Afin de s'assurer que la zone à traiter 8 s'étende en regard du dispositif de traitement laser 4, il faut donc orienter angulairement le récipient 1, comme cela va à être à présent décrit.

Pour permettre l'orientation du récipient 1, l'installation de traitement laser comprend, en amont du dispositif de traitement laser 4 selon le trajet de déplacement, au moins un dispositif de détection 10 et un dispositif d'orientation 12 du récipient 1. Par « en amont du dispositif de traitement laser 4 », on entend que le récipient 1 passe par le dispositif de détection 10 et par le dispositif d'orientation 12 avant de passer en regard du dispositif de traitement laser 4 lorsque le récipient 1 est transporté par le dispositif de transport 2 selon le trajet de déplacement.

Le dispositif de détection 10 est agencé pour détecter la position de la zone à traiter 8 sur le corps 6 du récipient 1. A cet effet, le dispositif de détection 10 comprend par exemple au moins un dispositif d'acquisition d'images 14 agencé pour acquérir plusieurs images du corps du récipient 1 en différentes positions angulaires par rapport à l'axe A du récipient 1. A cet effet, le dispositif de détection 10 comprend en outre un dispositif de mise en rotation 16 du récipient 1 autour de son axe A en regard du dispositif d'acquisition d'images 14. Ainsi, le dispositif de mise en rotation 16 permet de faire tourner le récipient 1 en regard du dispositif d'acquisition d'images 14 qui acquière des images à intervalles réguliers du récipient 1 dans différentes positions angulaires et un module d'analyse (non représenté) analyse les images acquises pour détecter la ou les images dans lesquelles la zone à traiter 8 est présente et en déduit la position angulaire de la zone à traiter 8 sur le corps du récipient 1. Un tel dispositif de détection 10 est par exemple décrit dans le document WO 2021/063788 et l'homme du métier pourra se référer à ce document pour plus de détails sur le dispositif de détection 10.

Le dispositif de mise en rotation 16 est par exemple formé par un plateau tournant agencé pour recevoir un fond du récipient 1, comme représenté sur la [Fig.2]. L'axe de rotation du plateau tournant est confondu avec l'axe A du récipient 1 lorsque celui-ci est disposé sur le plateau tournant.

Avantageusement, la détection de la zone à traiter 8 se fait alors que le récipient 1 circule sur une partie du trajet de déplacement du récipient 1. A cet effet, le dispositif de transport 2 comprend par exemple une roue d'orientation 18 mobile en rotation autour d'un axe de rotation et portant le dispositif de mise en rotation 16 de sorte à déplacer celui-ci selon un trajet circulaire. L'axe de rotation de la roue d'orientation 18 est sensiblement parallèle à l'axe A du récipient 1 lorsque celui-ci est placé sur le dispositif de mise en rotation 16. Ainsi, le récipient 1 tourne sur lui-même grâce au dispositif de mise en rotation et est déplacé dans le même temps sur une portion de cercle grâce à la roue d'orientation 18.

La portion de cercle sur laquelle le récipient 1 est déplacé par la roue d'orientation 18 forme ainsi une partie du trajet de déplacement du récipient 1 et s'étend entre une entrée 20 et une sortie 22. L'entrée 20 correspond au point, ou à la zone, du trajet circulaire défini par la roue d'orientation 18 auquel le récipient 1 est placé sur le dispositif de mise en rotation 16 pour être transporté sur une partie de ce trajet circulaire. La sortie 22 correspond au point, ou à la zone du trajet circulaire défini par la roue d'orientation 18 auquel le récipient quitte le dispositif de mise en rotation 16 et la roue d'orientation 18 pour être déplacé par le dispositif de transport 2 selon une autre partie du trajet de déplacement, comme cela sera décrit ultérieurement. La portion de cercle entre l'entrée 20 et la sortie 22 ne s'étend que sur une partie du trajet circulaire défini par la roue d'orientation 18, c'est-à-dire que le dispositif de mise en rotation 16 se déplace sans récipient sur une autre partie de ce trajet circulaire lorsque le dispositif de mise en rotation 16 se déplace de la sortie 22, où le récipient 1 pris en charge le dispositif de mise en rotation 16 qui celui-ci, à l'entrée 20, où un nouveau récipient 1 peut être pris en charge par le dispositif de mise en rotation 16.

Afin de maintenir le récipient 1 sur le dispositif de mise en rotation 16 lorsqu'il est transporté par la roue d'orientation 18, le dispositif de transport 2 comprend en outre au moins un dispositif de préhension autorisant la rotation du récipient 1 sur lui-même. A cet effet, le dispositif de préhension comprend par exemple au moins une pince 24 agencée pour maintenir le récipient 1 par le col de celui-ci et pour autoriser sa rotation sur lui-même lorsque le fond du récipient 1 repose sur le plateau tournant du dispositif de mise en rotation 16, comme représenté sur la [Fig.2]. La pince 24 est portée par la roue d'orientation 18 de sorte à se déplacer selon le trajet circulaire défini par celle-ci. A l'entrée 20, lorsque le récipient 1 est placé sur le plateau tournant, le col du récipient 1 s'engage dans la pince 24 et, à la sortie 22, lorsque le récipient 1 quitte le plateau tournant, le col du récipient 1 se désengage de la pince 24, comme cela sera décrit plus détail ultérieurement.

Le dispositif d'acquisition d'image 14 s'étend en regard d'une partie du trajet de déplacement du récipient 1, par exemple formée par un secteur angulaire du trajet circulaire défini par la roue d'orientation 18, comme représenté sur la [Fig.1]. Plus particulièrement, le dispositif d'acquisition d'image 14 s'étend par exemple en regard d'un secteur angulaire s'étendant au voisinage et en aval de l'entrée 20 de la roue d'orientation 18 jusqu'à un point intermédiaire 26 entre l'entrée 20 et la sortie 22 de la roue d'orientation 18. Entre l'entrée 20 et le point intermédiaire 26, une pluralité d'images du corps 6 du récipient 1 sont ainsi acquises et la position angulaire de la zone à traiter 8 sur le corps 6 est déterminée par le module d'analyse.

En aval du dispositif de détection 10, le dispositif d'orientation 12 est agencé pour orienter le récipient 1 en fonction de la position angulaire de la zone à traiter 8 détectée par le dispositif de détection 10 comme décrit précédemment. Plus particulièrement, le dispositif d'orientation 12 est agencé pour que la zone à traiter 8 soit placée en regard du dispositif de traitement laser 4 lorsque le récipient 1 est déplacé en regard de ce dispositif de traitement laser 4, comme cela sera décrit plus en détail ultérieurement. A cet effet, le dispositif d'orientation 12 comprend un module de calcul agencé pour calculer l'angle de rotation nécessaire du récipient autour de son axe A pour placer le récipient 1 dans une position angulaire dans laquelle la zone à traiter 8 se trouve dans une orientation angulaire souhaitée en fonction de la position angulaire de la zone à traiter 8 sur le corps 6 du récipient 1 déterminée par le dispositif de détection 10. Par orientation angulaire souhaitée, on entend l'orientation angulaire du corps 6 du récipient 1 autour de son axe dans laquelle la zone à traiter 8 se trouve en regard du dispositif de traitement laser 4 lorsque le récipient 1 est déplacé en regard de ce dispositif de traitement laser 4. Le dispositif d'orientation 12 comprend en outre un module de commande d'un dispositif de mise en rotation du récipient 1 agencé pour commander le dispositif de mise en rotation 16 pour que celui-ci fasse tourner le récipient 1 de l'angle de rotation calculé par le module de commande. Avantageusement, le dispositif de mise en rotation commandé par le module de commande est le dispositif de mise en rotation 16 utilisé pour faire tourner le récipient 1 en regard du dispositif d'acquisition d'image 14. Avantageusement également, selon le mode de réalisation décrit précédemment, l'orientation du récipient 1 par le dispositif d'orientation 12 se fait alors que le récipient est transporté par la roue d'orientation 18 du point intermédiaire 26 à la sortie 22 de la roue d'orientation 18. Plus particulièrement, le module de commande est agencé pour ajuster la vitesse de rotation du récipient 1 en fonction de l'angle de rotation nécessaire pour atteindre l'orientation angulaire souhaitée de la zone à traiter 8 en fonction de la position angulaire de la zone à traiter 8 déterminée par le dispositif de détection 10. En d'autres termes, plus l'angle de rotation nécessaire pour placer le récipient 1 dans l'orientation angulaire souhaitée est grand, plus la vitesse de rotation du récipient 1 autour de son axe est importante. La vitesse de rotation est notamment ajustée pour que la zone à traiter 8 du récipient 1 atteigne l'orientation angulaire souhaitée avant ou lorsque le récipient 1 atteint la sortie 22 de la roue d'orientation 18. Au cours de cette orientation, le récipient 1 reste maintenu par la pince 24 de sorte à pouvoir tourner autour de son axe A de l'angle de rotation calculé par le module de calcul.

Ainsi, lorsque le récipient 1 est placé selon une orientation quelconque sur le dispositif de mise en rotation 16 à l'entrée 20 de la roue d'orientation 18, il circule d'abord en regard du dispositif d'acquisition d'images 14 et la position angulaire de la zone à traiter 8 est déterminée alors que le récipient 1 circule de l'entrée 20 au point intermédiaire 26. Puis lorsque le récipient circule du point intermédiaire 26 à la sortie 22, il est orienté par le dispositif d'orientation 12 de sorte que la zone à traiter 8 se trouve dans l'orientation angulaire souhaitée à la sortie 22 de la roue d'orientation 18. Comme cela sera décrit ultérieurement, le fait que la détection de la zone à traiter 8 et son orientation se fasse alors que le récipient 1 est déplacé par une roue d'orientation 18 dédiée à ces étapes est particulièrement avantageux, notamment lorsque l'installation de traitement laser est agencée pour traiter une succession de récipients 1.

Il est entendu que le module d'analyse du dispositif de détection 10, le module de calcul et le module de commande du dispositif d'orientation 12 peuvent faire partie d'une seule unité de commande, commandant par exemple l'ensemble de l'installation de traitement laser.

Comme mentionné précédemment, l'installation de traitement laser est, selon un mode de réalisation, agencée pour traiter une succession de récipients 1 se déplaçant selon le trajet de déplacement les uns à la suite des autres. A cet effet, la roue d'orientation 18 est agencée pour déplacer la succession de récipients 1 les uns après les autres de l'entrée 20 à la sortie 22 afin que la zone à traiter 8 de chaque récipient 1 soit placée selon l'orientation angulaire souhaitée à la sortie 22 de la roue d'orientation 18. La roue d'orientation 18 porte alors une pluralité de dispositifs de mise en rotation 16 de récipients 1 et une pluralité de pinces 24 permettant de mettre en rotation les récipients 1 pour les faire passer les uns à la suite des autres en regard du dispositif d'acquisition d'images 14 puis pour les orienter de sorte à placer les zones à traiter 8 selon l'orientation souhaitée à la sortie 22 de la roue d'orientation 18.

Les récipients 1 sont acheminés jusqu'à l'entrée 20 de la roue d'orientation 18 par une partie amont du dispositif de transport 2 représentée sur la [Fig.1] et agencée pour placer les récipients 1 au pas de la roue d'orientation 18, le pas correspondant à la distance entre deux dispositifs de mise en rotation 16 successifs portés par la roue d'orientation 18. A cet effet, la partie amont du dispositif de transport 2 comprend par exemple un dispositif de mise au pas 28 et une roue de stabilisation 30.

Le dispositif de mise au pas 28 est par exemple formé par un passage 32 s'étendant entre deux vis sans fin 34 entre une entrée 36 et une sortie 38. Les récipients 1 sont introduits dans l'installation de traitement laser à l'entrée 36 du passage 32, en étant par exemple les uns contre les autres, et circulent jusqu' à la sortie 38 du passage 32 entre les deux vis sans fin 34, dont le pas de vis est agencé pour séparer progressivement les récipients 1 les uns des autres pour qu'ils s'étendent à une distance correspondant au pas de la roue d'orientation 18 à la sortie 38 du passage 32. A la sortie du passage 32, les récipients 1 sont transportés jusqu'à l'entrée 20 de la roue d'orientation 18 par la roue de stabilisation 30, qui est mobile en rotation autour d'un axe de rotation parallèle à l'axe de rotation de la roue d'orientation 18 et qui comprend par exemple une pluralité d'encoches 40 de réception des récipients 1. La roue de stabilisation 30 est agencée pour adapter la vitesse des récipients 1 à la vitesse de rotation de la roue d'orientation 18 et pour permettre le placement de chaque récipient 1 sur un plateau tournant et dans une pince 24 à l'entrée de la roue d'orientation 18. Les récipients 1 arrivent alors avec une orientation quelconque sur la roue d'orientation 18, alors qu'ils en sortent avec une position angulaire souhaitée, comme décrit précédemment.

A la sortie 22 de la roue d'orientation 18, le ou les récipients 1 placés dans la position angulaire souhaitée par le dispositif d'orientation 12 sont transférés à une roue de traitement 42 agencée pour déplacer le ou les récipients 1 sur une autre partie du trajet de déplacement pendant laquelle le traitement laser est appliqué par un dispositif de traitement laser 4 sur la ou chaque zone à traiter 8 du ou de chaque récipient 1.

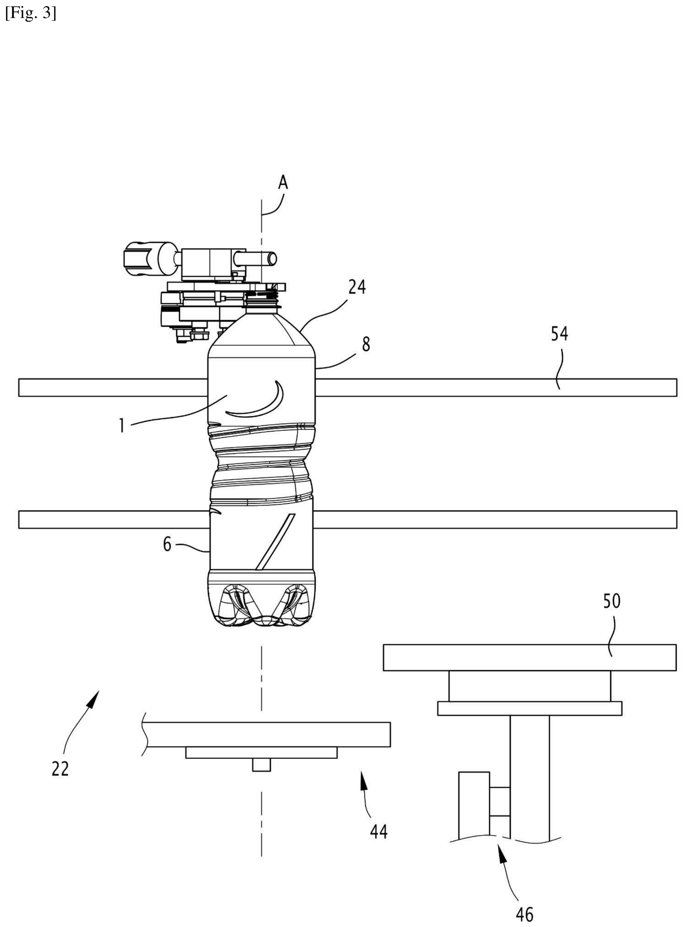

Selon un mode de réalisation, la roue de traitement 42 est distincte de la roue d'orientation 18 et s'étend en aval de la roue d'orientation 18 selon le trajet de déplacement du récipient 1. Le ou chaque récipient 1 est transféré de la roue d'orientation 18 à la roue de traitement 42 dans une zone de transfert 44 s'étendant entre la sortie 22 de la roue d'orientation 18 et une entrée 46 de la roue de traitement 42, comme représenté sur la [Fig.3].

Dans la zone de transfert 44, un récipient 1, ayant atteint la sortie 22 de la roue d'orientation 18 et étant dans une orientation angulaire souhaitée, est transféré à la roue de traitement 42 en maintenant l'orientation angulaire du récipient 1 pour que la zone à traiter 8 se trouve en regard d'un dispositif de traitement laser 4 porté par la roue de traitement 42, comme cela sera décrit ultérieurement. En d'autres termes, l'orientation souhaitée, acquise grâce au dispositif d'orientation 12 du récipient 1 est maintenue dans la zone de transfert 44, la rotation autour de son axe A du récipient 1 étant arrêtée dans cette zone de transfert 44.

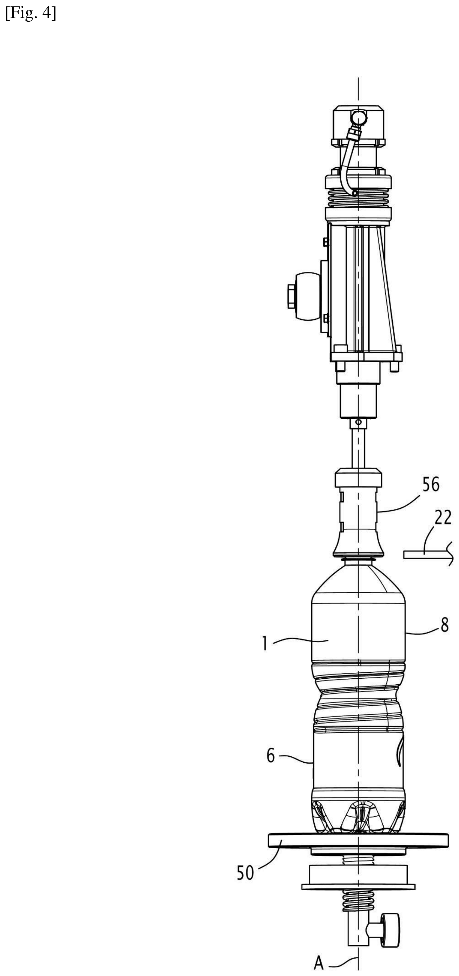

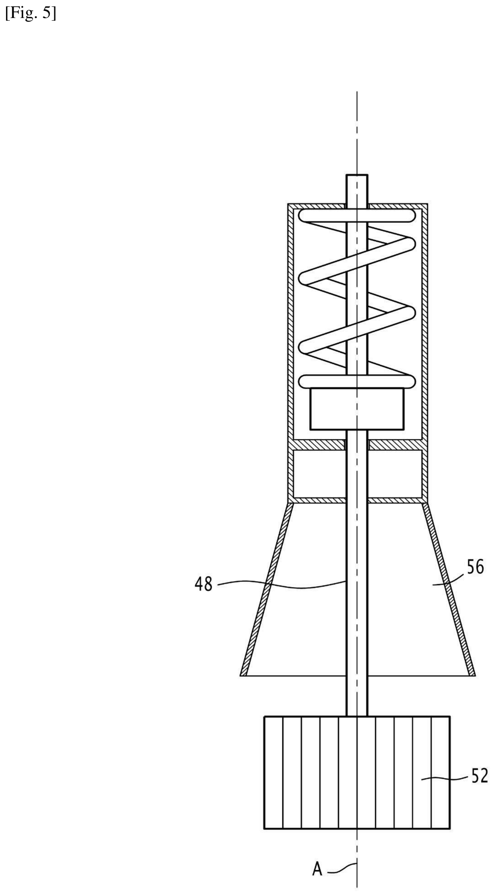

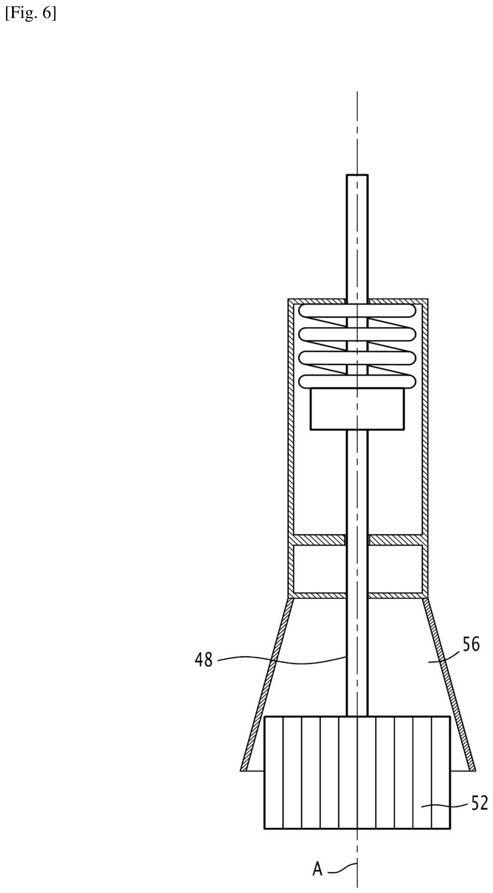

Pour ce faire, le dispositif de préhension du dispositif de transport 2 est agencé pour maintenir l'orientation du récipient 1 entre la sortie 22 de la roue d'orientation 18 et l'entrée 46 de la roue de traitement 42. A cet effet, le dispositif de préhension comprend, outre la ou les pinces 24, au moins un doigt d'appui 48 (Figs. 5 et 6) et un plateau fixe 50 (Figs. 3 et 4) agencés pour assurer une immobilisation du récipient autour de son axe A entre le plateau fixe 50, recevant le fond du récipient 1, et le doigt d'appui 48 en appui sur un bouchon 52 du récipient 1. Le doigt d'appui 48 et le plateau fixe 50 sont portés par la roue de traitement 42 l'un en regard de l'autre selon l'axe A du récipient et se déplacent selon le trajet circulaire défini par la roue de traitement 42.

Dans la zone de transfert 44, le récipient 1 passe de la roue d'orientation 18, où il est maintenu par un plateau tournant du dispositif de mise en rotation 16 et par une des pinces 24 du dispositif de préhension, à la roue de traitement 42, où il est maintenu par un plateau fixe 50 et un doigt d'appui 48 du dispositif de préhension, comme représenté sur la [Fig.3].

A cet effet, le trajet circulaire défini par la roue d'orientation 18 et le trajet circulaire défini par la roue de traitement 42 se croisent dans la zone de transfert 44, comme représenté sur la [Fig.1]. En d'autres termes, dans la zone de transfert 44, la sortie 22 de la roue d'orientation 18 et l'entrée 46 de la roue de traitement 42 sont adjacentes l'une de l'autre selon le trajet de déplacement du récipient 1. Dans cette zone de transfert 44, le plateau tournant soutenant le récipient 1 est agencé pour s'abaisser selon l'axe A de sorte à être écarté du fond du récipient 1 pendant que la pince 24 continu de maintenir le récipient 1 par son col. Dans le même temps, le doigt d'appui 48 est abaissé selon l'axe A pour venir en appui sur le bouchon 52 du récipient 1 et le fond du récipient 1 se place sur le plateau fixe 50. Cette étape se fait par exemple alors que le récipient 1 glisse le long d'une rampe 54 parallèle au trajet circulaire défini par la roue d'orientation 18 et empêchant le récipient 1 de s'écarter de la roue d'orientation 18 sous l'effet d'une force centrifuge. Ainsi, le passage de la roue d'orientation 18 à la roue de traitement 42 du récipient 1 se fait alors que le récipient 1 arrête de tourner sur lui-même et que sa zone à traiter 8 est orientée selon la position angulaire souhaitée et est fermement maintenu dans cette position par la partie du dispositif de préhension portée par la roue de traitement 42.

Lorsque le récipient 1 est maintenu entre le plateau fixe 50 et le doigt d'appui 48, la zone à traiter 8 se trouve en regard du dispositif de traitement laser 4 porté par la roue de traitement 42 et le traitement laser est appliqué sur la zone à traiter 8 alors que le récipient 1 est transporté selon une autre partie du trajet de déplacement par la roue de traitement 42 entre l'entrée 46 de la roue de traitement 42 et une sortie de celle-ci (non représentée). Selon un mode de réalisation, lorsque le récipient 1 est pris en charge par la partie du dispositif de préhension portée par la roue de traitement 42, le récipient 1 est centré sur le plateau fixe 50 au moyen d'une cloche 56 se plaçant autour du bouchon 52 du récipient 1 alors que le doigt d'appui 48 est en appui contre le bouchon 52, comme représenté sur les Figs. 5 et 6.

Comme indiqué précédemment, le traitement laser est par exemple un marquage laser d'un motif sur la zone à traiter 8, par exemple pour afficher un texte sur la zone à traiter 8. Le dispositif de traitement laser 4 est alors par exemple une tête laser agencée pour émettre un rayonnement laser vers la zone à traiter 8 du récipient 1 s'étendant en regard du dispositif de traitement laser. A cet effet, le dispositif de traitement laser 4 comprend le long d'un trajet optique au moins une tête optique de marquage laser équipée d'une unité de tête laser et d'un système optique pour focaliser un faisceau laser afin de générer une marque au niveau de la zone à traiter 8. Plus particulièrement, le marquage est par exemple obtenu par ablation, coloration ou décoloration, gravure ou moussage de la matière du récipient 1 dans la zone à traiter 8. Un tel traitement laser est plus particulièrement adapté pour des récipients en matière polymère. Dans le cas d'un marquage par moussage, la projection du faisceau laser est réalisée de manière à générer des bulles et des particules de matière dégradée dans tout ou partie de l'épaisseur de la paroi du corps récipient 1 au niveau de la zone à traiter 8.

Lorsque l'installation de traitement laser est agencée pour traiter une succession de récipients 1 comme décrit précédemment, la roue de traitement 42 porte plusieurs dispositifs de traitement laser 4 associés à une pluralité de plateaux fixes 50, de doigts d'appui 48 et de cloches 56 de sorte qu'un traitement laser peut être appliqué simultanément sur plusieurs récipients 1 alors que ceux-ci sont transportés de l'entrée 46 à la sortie de la roue de traitement 42.

Le fait de prévoir une roue d'orientation 18 séparée de la roue de traitement 42 permet alors de ne pas réduire le temps disponible pour appliquer le traitement laser sur la roue de traitement 42 puisque l'ensemble du trajet circulaire entre l'entrée 46 et la sortie de celle-ci peut être consacré à l'application du traitement laser. En outre, une telle installation de traitement laser permet de réaliser des économies sur les moyens mis en œuvre pour réaliser l'orientation des récipients 1. En effet, en prévoyant ces moyens sur une roue distincte de la roue de traitement 42, le nombre de dispositifs de mise en rotation peut notamment être diminué car la roue d'orientation 18 présente un diamètre nettement réduit par rapport à celui de la roue de traitement 42, le roue d'orientation 18 présentant par exemple douze plateaux tournants tandis que la roue de traitement 42 comprend par exemple trente-deux dispositifs de traitement laser 4.

Bien que cela soit moins avantageux, il est cependant entendu que l'invention s'applique également à une installation de traitement laser dans laquelle la roue d'orientation et la roue de traitement sont confondues, de sorte qu'un même carrousel porte le dispositif de détection, le dispositif d'orientation et le dispositif de traitement laser. Dans ce cas, la détection de la zone à traiter se fait sur un premier secteur angulaire du trajet circulaire défini par ce carrousel, l'orientation se fait sur un deuxième secteur angulaire et le traitement laser se fait sur un troisième secteur angulaire.

L'invention permet ainsi de ne traiter qu'une zone particulière et limitée d'un récipient, notamment lorsque celui-ci présente une forme non symétrique, en garantissant de façon efficace que le traitement laser est effectué dans cette zone. Une telle installation de traitement laser est particulièrement avantageuse pour marquer un récipient dont seule une fenêtre est laissée sensiblement lisse pour recevoir ce marquage.

## Revendications

1. Installation de traitement laser d'au moins un récipient (1) comprenant un corps (6) s'étendant selon un axe (A), ledit corps (6) comprenant au moins une zone à traiter (8) s'étendant sur une partie du corps (6) du récipient (1), ladite installation comprenant :
- un dispositif de transport (2) du récipient (1), agencé pour transporter le récipient selon un trajet de déplacement,
- au moins un dispositif de traitement laser (4) du récipient (1), ledit dispositif de traitement laser (4) s'étendant en regard d'une partie du trajet de déplacement et étant agencé pour appliquer un traitement laser sur le récipient (1) dans la zone à traiter (8) du corps (6) dudit récipient (1),
l'installation de traitement laser étant **caractérisée en ce qu'**elle comprend en outre, en amont du dispositif de traitement laser (4) selon le trajet de déplacement :
- un dispositif de détection (10) agencé pour détecter la position de la zone à traiter (8) sur le corps (6) du récipient (1),
- un dispositif d'orientation (12) du récipient (1) agencé pour faire tourner le récipient (1) autour de son axe (A) selon un angle de rotation déterminé en fonction de la position détectée de la zone à traiter (8), ledit dispositif d'orientation (12) étant agencé pour placer la zone à traiter (8) du récipient (1) selon une orientation dans laquelle ladite zone à traiter (8) s'étend en regard du dispositif de traitement laser (4) lorsque ledit récipient (1) est transporté en regard du dispositif de traitement laser (4).

2. Installation de traitement laser selon la revendication 1, dans laquelle le dispositif de détection (10) comprend au moins un dispositif d'acquisition d'images (14) et un dispositif de mise en rotation (16) du récipient (1), agencé pour faire tourner le récipient (1) autour de son axe (A) en regard du dispositif d'acquisition d'images (14), le dispositif d'acquisition d'images (14) étant agencé pour acquérir des images de différentes parties du corps (6) de récipient (1), un module d'analyse étant configuré pour détecter la position de la zone à traiter (8) à partir des images acquises par le dispositif d'acquisition d'images (14).

3. Installation de traitement laser selon la revendication 2, dans laquelle le dispositif de transport (2) comprend une roue d'orientation (18) portant le dispositif de mise en rotation (16) du récipient (1), ladite roue d'orientation (18) étant agencée pour transporter le récipient (1) sur une partie du trajet de déplacement, ledit récipient (1) tournant autour de son axe (A) lorsqu'il se déplace sur ladite partie du trajet de déplacement.

4. Installation de traitement laser selon l'une quelconque des revendications 1 à 3, dans laquelle le dispositif de transport (2) comprend une roue de traitement (42) portant le dispositif de traitement laser (4), ladite roue de traitement (42) étant agencée pour transporter le récipient (1) sur une partie du trajet de déplacement, ledit récipient (1) étant fixe par rapport au dispositif de traitement laser (4) avec la zone à traiter (8) en regard dudit dispositif de traitement laser (4) lorsqu'il se déplace sur ladite partie du trajet de déplacement, le dispositif de traitement laser (4) étant agencé pour appliquer le traitement laser à la zone à traiter (8) pendant le déplacement sur ladite partie du trajet de déplacement.

5. Installation de traitement laser selon les revendications 3 et 4, dans laquelle la roue d'orientation (18) est distincte de la roue de traitement (42), la roue de traitement (42) s'étendant en aval de la roue d'orientation (18), l'installation de traitement laser comprenant une zone de transfert (44) dans laquelle le récipient (1) est transféré de la roue d'orientation (18) à la roue de traitement (42).

6. Installation de traitement laser selon la revendication 5, dans laquelle la roue d'orientation (18) porte le dispositif d'orientation (12) du récipient (1), ledit dispositif d'orientation (12) étant agencé pour que le récipient (1) se trouve dans une position angulaire dans laquelle la zone à traiter (8) se trouve dans une orientation angulaire avec laquelle ladite zone à traiter (8) s'étend en regard du dispositif de traitement laser (4) lorsque ledit récipient (1) est transporté par la roue de traitement (42).

7. Installation de traitement laser selon l'une quelconque des revendications 5 ou 6, dans laquelle le dispositif de transport (2) comprend au moins un dispositif de préhension du récipient (1) lorsqu'il est transporté par roue d'orientation (18) et par la roue de traitement (42), ledit dispositif de préhension étant agencé pour autoriser la rotation du récipient (1) autour de son axe (A) lorsque ledit récipient (1) est transporté par la roue d'orientation (18) et pour empêcher ladite rotation lorsque ledit récipient (1) est transporté par la roue de traitement (42).

8. Installation de traitement laser selon la revendication 7, dans laquelle le dispositif de préhension est agencé pour maintenir l'orientation du récipient (1) dans la zone de transfert (44).

9. Installation de traitement laser selon l'une quelconque des revendications 1 à 8, dans laquelle le dispositif de traitement laser (4) est agencé pour projeter un faisceau laser sur la zone à traiter (8), la projection du faisceau laser étant réalisée de manière à générer des bulles et des particules de matière dégradée dans tout ou partie de l'épaisseur d'une paroi du corps (6) du récipient (1) au niveau de la zone à traiter (8).

10. Installation de traitement laser selon l'une quelconque des revendications 1 à 9, dans laquelle le dispositif de transport (2) est agencé pour transporter une succession de récipients (1) selon le trajet de déplacement, l'installation de traitement laser comprenant une pluralité de dispositifs de traitement laser (4) agencés pour appliquer un traitement laser sur la zone à traiter (8) de chaque récipient (1) de ladite succession de récipients (1).
